# EUROPEAN PATENT SPECIFICATION

(11) **EP 2 331 760 B1**
(45) Date of publication and mention of the grant of the patent: **02.11.2016**
(21) Application number: 09818049.0
(22) Date of filing: 23.09.2009
(51) Int. Cl.: E04B 1/68, F16J 15/02, E06B 3/62, F24F 13/02

(54) **ASSEMBLING OF SEAL AND PLATES TO WALL ELEMENT**
ANBRINGUNG VON VERSIEGELUNGEN UND PLATTEN AN EINEM WANDELEMENT
ASSEMBLAGE DE JOINTS ET DE PLAQUES SUR UN ÉLÉMENT DE PAROI

(30) Priority: 30.09.2008 SE 0802064
(43) Date of publication of application: 15.06.2011
(73) Proprietor: Fläkt Woods AB, 55184 Jönköping (SE)
(72) Inventor: AXELSSON, Claes-Göran, S-553 38 Jönköping (SE)
(74) Representative: Pitkänen, Hannu Alpo Antero
(86) International application number: PCT/SE2009/000420
(87) International publication number: WO 2010/039077

(56) References cited:
- EP-A1- 0 366 637
- EP-A1- 0 412 802
- EP-A2- 0 038 015
- EP-A2- 0 140 338
- EP-A2- 1 306 513
- EP-A2- 1 400 167
- DE-A1- 3 049 605
- FR-A1- 2 747 172
- GB-A- 1 258 563
- GB-A- 2 264 165
- US-A1- 2002 153 725

## Description

Present invention relates to en new design of a sealing and where plates and sealing are assembled together to a wall element in a new way, and this preferably to a blower set, and where the entire blower set, or the entire air duct is build up, or partly build up, by the new wall elements designed according to the preamble of claim1.

The main new characteristics for the new wall elements are that the tightness between the different wall elements, in for example an entire blower set or an entire air duct, is guaranteed, also in those cases when the individual wall elements are produced with higher manufacturing tolerances and where at the same time the requirement of additional stabilization of the wall elements are reduced compared to present current standards, this means that for example supports between the individual wall elements, which usually are included in an entire duct system, can partly be excluded. Reduced requirements of tolerances bring about that the individual elements can be produced at a lower cost, at the same time as the need of support element is reduced and this in spite of the fact that the requirement of tightness for the entire blower set is entirely fulfilled.

The previous known solutions of the problem with leakage were always based on that a sealing or a sealing element were designed to manage the tightness even by some deviation in tolerances in the cooperating construction elements and this by designing the sealing with a big contact surface or with big sealing lips which can be deformed. The wall element itself however is not developed and there are no new solution based on cooperation between a new sealing and a new design of the cooperating wall elements, the cooperating plate parts.

Solutions which are described are evident from among others GB 1 174 093. Other publications which describe the query of sealing in similar applications are evident from DE 199 55 151 A1 and EP 1 306 513 A3 respective. A relevant background art is described in EP 0 412 802 A1 where a big seal unit (8; 10) is used for sealing between the edges of two adjacent members (2, 4; 4, 6). The seal unit (8; 10) comprises a carrier (12), which encloses the whole edge of two adjacent members (4, 6), and further a first sealing element (16) in the form of a lip and which lip abuts the edge of the adjacent edge and which is compressed between the edges when mounted. The seal unit (8; 10) further comprises a second sealing element (18) in the form of a lip and also a rigid cover element (22) which in the assembled position covers the carrier (12). The seal unit (8; 10) encloses the whole edge and provides by its design multiple seals between the edges of the two adjacent members (2, 4; 4, 6). The seal unit (8; 10) is quite big and includes lot of material.

The object of present invention is to counteract and as far as possible to eliminate the above mentioned problem. Furthermore the invention will bring the state of the art further in different aspects. Those objects are realized according to the present invention in that a device is mainly constituted in a way, which is evident from the characteristic part of claim 1.
Further characteristics of and advantages by the invention are evident from the following description with reference to the attached drawings, showing a preferred, but not limiting example of performance of a entire or a part of a system of fan channels.

In the currently showed and described design of the joining of wall sections or plate sections with associated sealing, is in the following a preferred design described and where this is schematically illustrated in:
Figure 1 showing the design of the sealing profile
Figure 2 showing the principal design of a blower set based on wall elements with the new sealing profile.
Figure 3 showing the assembling of the cooperating wall elements.

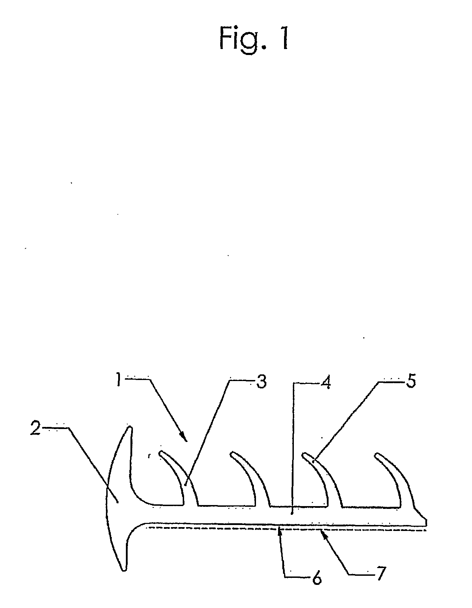

Figure 1 shows a preferred design of the sealing profile 1 in a sectional view. The profile has an end surface 2 which is placed perpendicular to the part constituting the sealing section 3 itself. The sealing section 3 is build up of a base part 4 from which sealing lips protrude on one side, below named lips 5. The dimensions of the sealing profile are naturally adapted to the dimensions of the wall element to which it has to cooperate. An example of relations between dimensions in the sealing profile is that the base part 4 has a length of 15-40 and preferably 25 mm, a material thickness of 0.3-1.5 and preferably 1 mm and where the lips protrude 2-6 and preferably 4 mm from the plane surface 6 of the base part.

The lips are designed in a way that they approximately are inclined 45° towards the end surface 2 and have an outer part which is more or less parallel to the base part. The material thickness of the lips is preferably slightly smaller than the base part itself. Advantageous the sealing profile with a base length of approximately 25 mm has 4 lips more or less equally distributed along the length of the base part. The stiffness and slanting of the lips 5 are tested to give a perfect tightness, a tightness which normally is stipulated in functional demands by the line of business, also with a small deformation or a small reduction of the overall dimensions of the sealing part. By the design of the sealing profile it has been made possible to produce the individual plate details with little lower requirements.of shape/dimensional accuracy, which means lower manufacturing costs by the plate details. A normal material quality for the sealing profile is an EPDM rubber, but also polymers based on plastic are of course plausible. To assemble the sealing strip on the wall element the strip is preferably provided with a double-stick tape 7, optionally with an adhesive. The fixing means selected is applied on the base part 4 and its plane surface/side 6.

The end surface has a design which means that it extends approximately twice as far from the base part 4 and its plane surface 6 as the lips 5 extends, whereas the end surface 2 in the other direction only extends approximately as far as the width of the sealing section 3. Accordingly the end surface is totally three times as wide as the sealing section 3 itself and the end surface preferably has a slightly convex form, seen in a sectional view or from an end view, and its inner side, the one who is directed towards the lips, is preferably slightly convex. By this design a sealing is obtained also against the outer interface of the wall element, even if this design/sealing first of all is designed in view of the aesthetics. The end surface 2 gives itself also a form of support and an indication, that the individual wall element is assembled in its correct position relative the cooperating wall element or elements.

By the described design of the sealing profile a profile is created which means that if different wall elements are assembled, with the described sealing profile between the wall elements, the sealing requirements are fulfilled even in cases with big size tolerances in the included wall elements.

The above example of size relations in the sealing profile is naturally dependent on the entire physical size of the duct system, for what reason the size specifications only refer to an example which is variable within the scope of the invention.

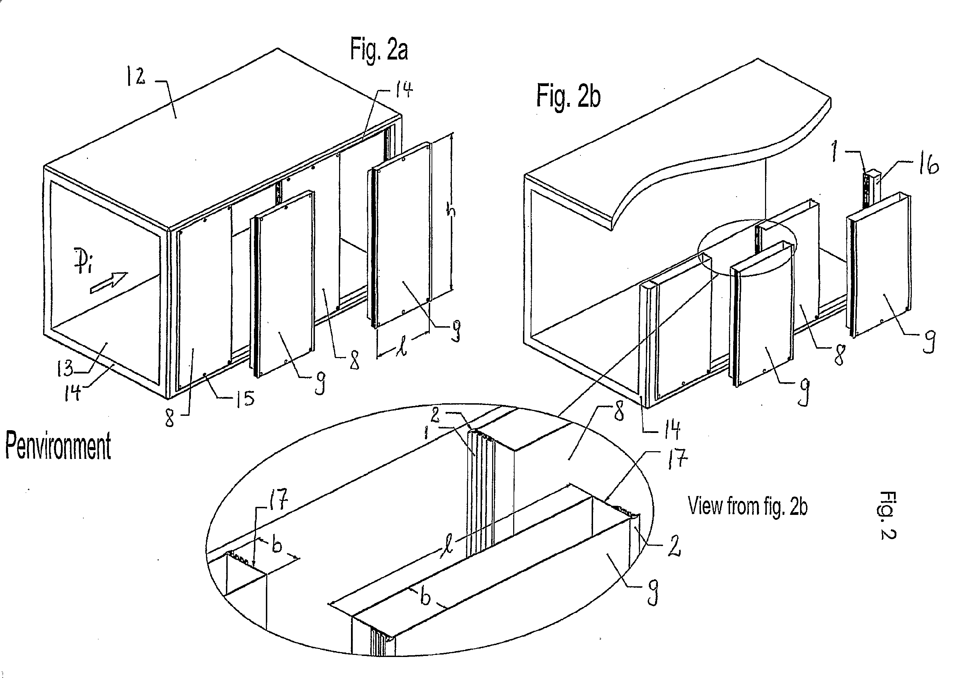

Figure 2 shows in the partial figure 2a a section of for instance a blower set with a thinkable air current, with a static pressure named Pi.

The blower set has a top section 12, a bottom section 13 and where the top and bottom sections respective are preferably fixed to a frame section 14. This frame section 14 optionally also extends in the longitudinal direction of the duct system, optionally the top and bottom sections are designed with side sections who are folded or bent in a way that they forms a frame against which the individual wall elements are anchored in their respective (short) ends. Accordingly, the entire blower set is in this design which is described build up of a bottom section 13 and a top section 12 and one or more frame sections 14, which together constitute the framework of the blower set. The side elements or the walls are constituted by the wall elements 8 and 9 respective.

The dimensions of the different components included in the entire duct system vary in nature depending on the size of the individual set, i.e. on the air flow and on other physical quantities determining the overall dimensions required in the individual case. In figure 2 the wall elements 8 and 9 respective are assumed to have a width =I and a height =h even if this only is an example. The individual wall elements can natural be provided with different widths. Preferably the wall elements are fixed to the frame sections 14 or to the folded or bent sides of the lower or top sections.

By the assembling of the wall elements is shown in figure 2 how a first wall element 8 is assembled and fixed, preferably with a screwed joint 15. According to the figures an additional first wall element 8 is assembled. Between those both wall elements there are provided a second wall element 9 which isn't yet assembled.

In figure 2b parts of the top section 12 is cut away and you see in this figure an alternative of design where the duct system has frame sections 14, and where the cut exposed frame section 16 is provided with a sealing profile 1. The sealing profile is assembled in the same way as described below.

In the view from figure 2b the sealing profile 1 is assembled on a first wall element 8 and located in a way that the end surface 2 of the sealing profile is directed inwards against the duct system whereas the sealing profile assembled on a second wall element 9, the wall element which not yet is assembled in its final position, has its end surface 2 directed outwards from the duct system.

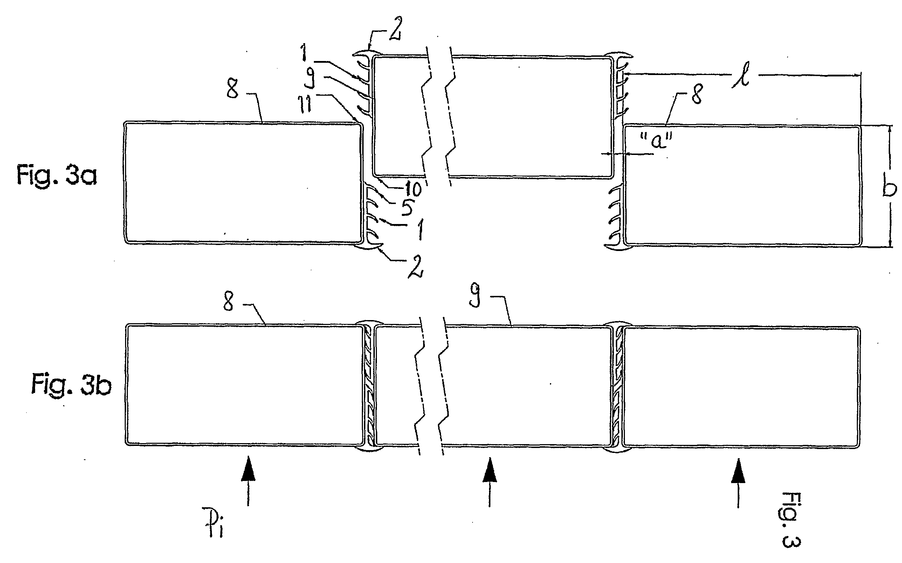

Figure 3 shows the assembling of the cooperating wall elements.

In figure 3a a horizontal section is shown of two wall elements 8 and one wall element 9. The wall elements has a width =I and a thickness =b and also a height =h which, as well as b and I, are variable.

The wall elements 8 can represent a fixed assembled part of the sides in an entire duct system. Those wall elements 8 cooperate in this example with another wall element 9 which for example is a part of a dismountable section in the entire duct system.
In figure 3a the second wall element 9, the one which is movable relative the wall element 8, is only fitted in, or is assembled approximately half the way to its final position.

In figure 3b the both wall elements 8 and the wall elements 9 respective are assembled to their final assembled positions.

According to figure 3a it is evident that there are assembled sealing profiles 1, which are assembled on both of the wall elements 8 and 9 respective. The assembling of the sealing profile on the wall elements is preferably made with bonding. The assembling is made on the gable of the wall element, i.e. in the extension of the wall element and not on the inner side of the wall element which is the previous standard method. By assembling the sealing profile on the gable 17 of the element, the sealing profile will cooperate with a second wall element, which is placed in extension of the first wall element, and not with any separate stop placed inside the wall element, which was the current design in prior constructions.
In the new design of the wall element and the sealing profile, the requirement of a separate stop, to which the sealing profile would have to cooperate, is consequently excluded.

The sealing profiles runs, as is evident from figure 2, the whole way along the sides of the elements, in principle along the whole of the height =h, in this dace along the vertical sides.

Since the length of the sealing profile only corresponds to a part, preferably 50 % of the width of the plate profile or gable 17 from which the wall element is build up or the end gable which is formed when the wall element is produced, the advantages that the movable element in connection with the assembling first is fitted in the opening between the wall elements 8 are obtained, and this without that a higher force hast to be applied. First when the wall element 9 comes to a position where its front corner 10 reach the sealing profile, assembled on the element 8, a counter force appears. In this position the front corner will begin to press against the sealing lips 5. At the same time the second sealing profile, the one which is assembled on the wall element 9, will reach the front corner 11 in the wall element 8.

In this position of assembling a force will be needed to finally move the wall element 9 to its final position, the position according to figure 3b, where both of the wall elements are on the same level.

The assembling force is obvious dependent of the slit "a" between the elements 8 and 9. Because the sealing profile 1 has the selected design with a number of lips, which has a curved form rear towards the end surface 2 in the sealing profile, both corners 10 and 11 respective of the wall elements will press the lips of both the sealing profiles rearwards and inwards to the base part 4 of the sealing profile. This change in position of the lips occurs without a need of high forces to be applied, which means that the assembling work is simple and therefore cost-efficient. To further facilitate the fitting in of the wall element 9 the sealing profile should be treated with a suitable lubricant or a friction lowering coating.

When both cooperating wall elements 8 and 9 are assembled the sealing profiles and their lips 5 are clamped and in close contact with the cooperating wall element.

By an inner overpressure in the entire duct system the sealing lips will be exposed to a force which attempts to press the lip away from the end surface 2 of the sealing profile and this means that the lip will be pressed harder against the cooperating wall element, which then reinforces the sealing ability of the sealing profile.

Also in the case where an inner negative pressure would arise in the entire duct system the sealing ability is reinforced, since the sealing lips 5 of the sealing profile assembled on the wall element 9 in that case is exposed to a force from the outer surrounding medium, usually air, which attempts to press the lips away from the end surface of the sealing profile an inwards towards the duct system, which means that the lips will be pressed harder against the cooperating wall elements 8.

The sealing profile works consequently in both an overpressure and in a negative pressure =Pi, in the entire duct system relative the surrounding pressure =Penvironment. This requirement is fulfilled by that the length of the sealing profile only constitute a part, preferably 50 % of the thickness =b of the wall element and that the sealing profile 1 is assembled on both of the cooperating wall elements, as is described above.

With the design which the sealing profile has in combination with that the wall elements are given an approved stiffness, no separate supporting profiles are required behind or inside the cooperating wall elements, which is standard in present constructions.

By the design of the sealing profile also a reinforced protection against unintentional disassembling of the movable wall element is obtained. It is simple to assemble the wall elements, but higher forces are required for disassembling. By a disassembling of the movable wall element 9 a sealing lips 5 will "make resist", since they in this case are directed against the direction of motion that the wall element is given when it is disassembled. This means that by a normal deformation of the sealing profile, a higher force are required to overcome the resistance which the sealing profile creates. Naturally the movable wall element 9 usually also is fixed to the entire duct system by some form of screw joint 15. For a perfect sealing function the distance between the wall elements must of course be chosen depending on the physical dimensions of the entire duct system, which also determine the physical dimensions of the sealing profile. Generally it can be stated that the distance between the wall elements with the new sealing can vary with a measure that imply that the production of the elements can be made with wide, but in workshop practice normal tolerances, without negative affecting the sealing function of the entire duct system.

The described design of the wall elements 8 and 9 and their structure and way of assembling, do not exclude solutions which are based on that also the top section 12 and possible also the bottom section 13 are build up in the same way, i.e. that more than only the wall elements are designed in some form of module thinking with sealing profiles between the cooperating modules.

The described sealing profile can of course be altered only by dimensions so that for example the length is chosen different with a sealing profile which cover 60 % of the thickness of the wall element and the second cooperating one cover the remaining 40 %, or that both cooperating sealing profiles only cover parts of the entire thickness of the wall elements.

By the design of the sealing profile and by that it in the final assembled position of the cooperating wall elements gets an overall width which is made up of two cooperating sealing profiles, following advantages are obtained:
- simple to fit in the movable wall element to the fixed assembled wall elements
- a final fitting in of the movable element with low assembling forces
- a tight joint which is reinforced when a inner overpressure arise in the entire duct system
- a sealing joint which require higher forces in the position where the movable wall element has to be disassembled
- the sealing profile do not need any additional support profiles
- the wall elements can be produced with slightly wider dimensional tolerances owing to that he sealing profile has a high flexibility with maintained sealing ability
- a sealing joint which is based upon that two cooperating and preferably equal sealing profiles constitute the sealing
- that an overpressure in the duct system results in that the sealing profile which is assembled with its end surface inwards to the duct system gives a reinforcing of the sealing ability in the entire sealing joint
- that a negative pressure in the duct system results in that the sealing profile which is assembled with its end surface outwards to the surrounding gives a reinforcing of the sealing ability in the entire sealing joint
- that the end surface of the sealing profile which is assembled on the outer side relative the duct system results in a decorative overlapping of the junction between the cooperating wall elements.
- that the end surface of the sealing profile which is assembled on the outer side relative the duct system gives an indication on that the wall elements are assembled in place

The advantages of the new sealing and the new design of the wall elements gives as a result conditions for low costs of production of, for example, a blower duct system, a decorative/esthetic junction between the cooperating wall elements, with a quality assured sealing function in the entire duct system.

**Component list**

| | |
|---|---|
| 1 = sealing profile | 2 = end surface |
| 3 = sealing section | 4 = base part |
| 5 = sealing lip - named lip | 6 = surface |
| 7 = tape | 8 = wall element |
| 9 = wall element | 10=front corner |
| 11= front corner | 12= top section |
| 13= bottom section | 14= frame section |
| 15= screw joint | 16= frame section |
| 17= gable | |

## Claims

1. Method of assembling a first sealing profile (1) on a first fixed assembled wall element (8) of an air duct system and a second sealing profile (1) on a second cooperating movable wall element (9) of said air duct system, and where the sealing profiles (1) preferably are assembled on the long side =h of the wall element, **characterized in that** the sealing profile (1) and its width only represents a part, preferably 50 % of the thickness =b of a gable (17) of the first fixed assembled wall elements (8) and the second movable wall elements (9) respectively and through this assembly, the sealing profile (1) will interact with the opposite wall element and the seal between the two wall elements is obtained by the distance between the two cooperating wall elements is suited to the sealing profile design.

2. Method according to claim 1, **characterized in that** the sealing profile (1) is assembled on the wall elements by a double-stick tape (7), optional with an adhesive which is applied on a sealing section (3) and its plane surface or side (6).

3. Method according to claim 1, **characterized in that** the second movable wall element (9), since the element is assembled in the opening provided between the both first, fixed assembled wall elements (8), is initially fitted in the opening between the first fixed assembled wall elements (8) without a need of a force to be applied in this first step of assembly, and earliest when a front corner (10) of the second movable wall element (9) has reached the sealing profile (1) assembled on the first fixed assembled wall element (8), a counter force appears as the front corner (10) in this assembling position begins to press against sealing lips (5) of the sealing profile (1) and at the same time the other sealing profile, the one who is assembled on the second movable wall element (9), will reach a front corner (11) of the first fixed assembled wall element (8), and in this position a force is required to finally move the movable wall element (9) to its final position, where the outer surface in both wall elements normally are in the same level.

4. An air duct system comprising:
a first fixed assembled wall element (8); and
a second cooperating movable wall element (9)
a sealing profile (1), assembled on the first fixed assembled wall element (8) and respectively on the second movable wall element (9), and where the sealing profiles (1) preferably are assembled on the long side =h of the wall elements, **characterized in that** that the sealing profile (1) and its width only represents a part, preferably 50 % of the thickness =b of a gable (17) of the first fixed assembled wall elements (8) and the second movable wall elements (9) respectively, and that the sealing profile is provided with a sealing section (3) which is built up of a base part (4) from which at one side a number of sealing lips (5) protrude, and that these lips are inclined, preferably by 45°, towards an end surface (2) of the sealing profile and that the base part (4) on the opposite side of the lips (5) is provided with a plane surface or side (6).

5. Air duct system according to claim 4, **characterized in that** the distance between the individual wall elements, between the first fixed assembled wall element (8) and the second movable wall element (9), in combination with the sealing profile (1) is variable and that consequently the production of the elements are made with wide, but in production normal tolerances, and this with maintained perfect sealing function in the entire duct system.

## Patentansprüche

1. Verfahren zum Montieren eines ersten Dichtungsprofils (1) auf einem ersten fest montierten Wandelement (8) eines Luftkanalsystems und eines zweiten Dichtungsprofils (1) auf einem zweiten zugeordneten beweglichen Wandelement (9) des Luftkanalsystems, und wobei die Dichtungsprofile (1) vorzugsweise auf der Langseite =h des Wandelementes montiert werden, **dadurch gekennzeichnet, dass** die Dichtungsprofile (1) und ihre Breite nur einen Teil, vorzugsweise 50%, der Dicke =b eines Giebels (17) des ersten fest montierten Wandelementes (8) bzw. des zweiten beweglichen Wandelementes (9) darstellt und durch diese Montage das Dichtungsprofil (1) mit dem gegenüberliegenden Wandelement zusammenwirken wird und die Dichtung zwischen den zwei Wandelementen durch den Abstand zwischen den zwei zusammenwirkenden Wandelementen erhalten wird und an die Ausführung des Dichtungsprofils angepasst ist.

2. Verfahren nach Anspruch 1, **dadurch gekennzeichnet, dass** das Dichtungsprofil (1) auf den Wandelementen mittels eines doppelseitigen Klebebands (7), optional mit einem Kleber, der auf einem Dichtungsabschnitt (3) und auf die ebene Oberfläche oder Seite (6) aufgetragen wird, montiert wird.

3. Verfahren nach Anspruch 1, **dadurch gekennzeichnet, dass** das zweite bewegliche Wandelement (9), wenn das Element in der zwischen den beiden ersten, fest montierten Wandelementen (8) montiert wird, anfangs in der Öffnung zwischen den ersten fest montierten Wandelementen (8) ohne die Notwendigkeit der Anwendung einer Kraft in diesem ersten Montageschritt eingepasst wird, und sobald eine vordere Ecke (10) des zweiten beweglichen Wandelementes (9) das Dichtungsprofil (1) erreicht hat, auf dem ersten fest montierten Wandelement (8) montiert wird, eine Gegenkraft auftritt, da die vordere Ecke (10) in dieser Montageposition gegen Dichtlippen (5) des Dichtungsprofils (1) und gleichzeitig das andere Dichtungsprofil zu drücken beginnt, wobei die eine auf dem zweiten beweglichen Wandelement (9) montierte eine vordere Ecke (11) des ersten fest montierten Wandelementes (8) erreichen wird, und wobei in dieser Position eine Kraft erforderlich ist, um das bewegliche Wandelement (9) schließlich in seine Endposition zu bewegen, wobei die äußere Fläche an beiden Wandelementen normalerweise auf dem gleichen Niveau ist.

4. Luftkanalsystem, das Folgendes aufweist:
ein erstes fest montiertes Wandelement (8); und
ein zweites damit zusammenwirkendes bewegliches Wandelement (9);
ein Dichtungsprofil (1), das an dem ersten fest montierten Wandelement (8) bzw. dem zweiten beweglichen Wandelement (9) montiert ist, und wobei die Dichtungsprofile (1) vorzugsweise auf der langen Seite =h der Wandelemente montiert sind, **dadurch gekennzeichnet, dass** das Dichtungsprofil (1) und seine Breite nur einen Teil, vorzugsweise 50%, der Dicke =b eines Giebels (17) des ersten fest montierten Wandelementes (8) bzw. des zweiten beweglichen Wandelementes (9) darstellen, und dass das Dichtungsprofil mit einem Dichtungsabschnitt (3) versehen ist, der auf einem Basisteil (4) aufgebaut ist, von dem an einer Seite eine Anzahl von Dichtungslippen (5) hervorsteht, und dass diese Lippen geneigt sind, vorzugsweise um 45°, zu einer Endfläche (2) des Dichtungsprofils, und dass das Basisteil (4) auf der gegenüberliegenden Seite der Lippen (5) mit einer ebenen Oberfläche oder Seite (6) versehen ist.

5. Luftkanalsystem nach Anspruch 4, **dadurch gekennzeichnet, dass** der Abstand zwischen den einzelnen Wandelementen zwischen dem ersten fest montierten Wandelement (8) und dem zweiten beweglichen Wandelement (9), in Kombination mit dem Dichtungsprofil (1) veränderbar ist und dass folglich die Produktion der Elemente mit weiten, jedoch normalen Produktionstoleranzen durchgeführt wird, und das mit einer Beibehaltung der perfekten Dichtungsfunktion in dem gesamten Kanalsystem.

## Revendications

1. Procédé d'assemblage d'un premier profilé d'étanchéité (1) sur un premier élément de paroi assemblé fixe (8) d'un système de conduit pour l'air et d'un deuxième profilé d'étanchéité (1) sur un deuxième élément de paroi mobile coopérant (9) dudit système de conduit pour l'air, et dans lequel les profilés d'étanchéité (1) sont de préférence assemblés le long du grand côté =h de l'élément de paroi, **caractérisé en ce que** le profilé d'étanchéité (1) et sa largeur ne représentent qu'une partie, de préférence 50 % de l'épaisseur =b d'un pignon (17) des premiers éléments de paroi assemblés fixes (8) et des deuxièmes éléments de paroi mobiles (9) respectivement, et grâce à cet assemblage, le profilé d'étanchéité (1) va entrer en interaction avec l'élément de paroi opposé, et le joint d'étanchéité entre les deux éléments de paroi est obtenu par le fait que la distance entre les deux éléments de paroi coopérants est adaptée à la configuration du profilé d'étanchéité.

2. Procédé selon la revendication 1, **caractérisé en ce que** le profilé d'étanchéité (1) est assemblé sur les éléments de paroi à l'aide d'un ruban adhésif double face (7), de manière facultative avec un adhésif qui est appliqué sur un tronçon de joint d'étanchéité (3) et sur son côté plat ou sur sa surface plane (6).

3. Procédé selon la revendication 1, **caractérisé en ce que** le deuxième élément de paroi mobile (9), étant donné que l'élément est assemblé dans l'ouverture prévue entre les deux premiers éléments de paroi assemblés fixes (8), est monté dans un premier temps dans l'ouverture entre les premiers éléments de paroi assemblés fixes (8) sans devoir exercer une force quelconque dans cette première étape d'assemblage, et au plus tôt lorsqu'un coin avant (10) du deuxième élément de paroi mobile (9) a atteint le profilé d'étanchéité (1) assemblé sur le premier élément de paroi assemblé fixe (8), une force antagoniste s'exerce lorsque le coin avant (10) dans cette position d'assemblage commence à exercer une pression sur des lèvres d'étanchéité (5) du profilé d'étanchéité (1) et, en même temps, l'autre profilé d'étanchéité, celui qui est assemblé sur le deuxième élément de paroi mobile (9), va atteindre un coin avant (11) du premier élément de paroi assemblé fixe (8) et, dans cette position, une force est requise pour amener en définitive l'élément de paroi mobile (9) dans sa position finale dans laquelle les surfaces externes des deux éléments de paroi se trouvent normalement au même niveau.

4. Système de conduit pour l'air, comprenant :
un premier élément de paroi assemblé fixe (8) ; et
un deuxième élément de paroi mobile coopérant (9) ;
un profilé d'étanchéité (1) assemblé sur le premier élément de paroi assemblé fixe (8) et respectivement sur le deuxième élément de paroi mobile (9), et dans lequel les profilés d'étanchéité (1) sont assemblés de préférence sur le grand côté =h des éléments de paroi, **caractérisé en ce que** le profilé d'étanchéité et sa largeur ne représentent qu'une partie, de préférence 50 % de l'épaisseur =b d'un pignon (17) des premiers éléments de paroi assemblés fixes (8) et des deuxièmes éléments de paroi mobiles (9) respectivement, et **en ce que** le profilé d'étanchéité est muni d'un tronçon de joint d'étanchéité (3) qui est constitué d'une partie de base (4) par rapport à laquelle, d'un côté, un certain nombre de lèvres d'étanchéité (5) font saillie, et **en ce que** ces lèvres sont inclinées, de préférence en formant un angle de 45°, en direction d'une surface terminale (2) du profilé d'étanchéité, et **en ce que** la partie de base (4) sur le côté opposé des lèvres (5) est munie d'un côté plat ou d'une surface plane (6).

5. Système de conduit pour l'air selon la revendication 4, **caractérisé en ce que** la distance entre les éléments de paroi individuels, entre le premier élément de paroi assemblé fixe (8) et le deuxième élément de paroi mobile (9), en combinaison avec le profilé d'étanchéité (1), est variable, et **en ce que** par conséquent la production des éléments est réalisée avec des tolérances larges, mais normales dans la production, et ceci tout en maintenant une fonction d'étanchéité parfaite dans le système de conduit dans son ensemble.
